# EUROPÄISCHE PATENTSCHRIFT

(11) **EP 3 708 042 B1**
(45) Veröffentlichungstag und Bekanntmachung des Hinweises auf die Patenterteilung: **23.08.2023**
(21) Anmeldenummer: 19174160.2
(22) Anmeldetag: 13.05.2019
(51) Int. Cl.: A47J 37/06, A47J 37/07

(54) **GRILLGERÄT**
GRILLING DEVICE
BARBECUE

(43) Veröffentlichungstag der Anmeldung: 16.09.2020
(73) Patentinhaber: Walter Werkzeuge Salzburg GmbH, 5081 Anif (AT)
(72) Erfinder: Rothenberger, Helmut, 60323 Frankfurt am Main (DE)
(74) Vertreter: Schwarz & Partner Patentanwälte GmbH

(56) Entgegenhaltungen:
- CN-A- 109 171 487
- DE-A1-102016 008 103
- DE-A1-102017 102 892
- US-A1- 2015 305 542
- US-B2- 7 117 866
- Anonymous: "F&F 928°C Original-Grill-Röster. Der Mobile. 3,5 kW. A35T Doppelwandiger Oberhitzegrill mit Hochleistungs-Infrarot-Brenner, Piezo Zündung, Fett-Auffangwanne.: Amazon.de: Garten", , 15. Oktober 2018 (2018-10-15), XP055632515, http://www.amazon.de Gefunden im Internet: URL:https://www.amazon.de/Original-Grill-R öster-Doppelwandiger-Oberhitzegrill-Hochle istungs-Infrarot-Brenner-Fett-Auffangwanne /dp/B07JGWW7KD/ref=asc_df_B07JGWW7KD/?tag= googshopde-21&linkCode=df0&hvadid=31011117 7194&hvpos=1o4&hvnetw=g&hvrand=66094365684 89054279&hvpone=&hvptwo=&hvqmt=&hvdev=c&hv dvcmdl=&hv [gefunden am 2019-10-15]

## Beschreibung

Die Erfindung betrifft ein Grillgerät zum Garen und Grillen von Grillgut, umfassend ein Außengehäuse, ein Innengehäuse, welches den Grillinnenraum begrenzt und eine erste Seitenwand, eine zweite Seitenwand, die der ersten Seitenwand gegenüberliegt, eine Deckenwand, eine Rückwand und eine Bodenplatte aufweist, wobei der Grillinnenraum von der Frontseite zugänglich ist, einen Heizstrahler, welcher in die Deckenwand des Grillinnenraums eingebracht ist, wobei der Heizstrahler vorzugsweise ein Gasbrenner ist, ein erstes Paar im Wesentlichen horizontal ausgerichteter Führungen, welche an der ersten und zweiten Seitenwand jeweils auf gleicher Höhe angeordnet sind. Außerdem betrifft die Erfindung ein Verfahren zum Grillen von Grillgut mit einem solchen Grillgerät.

### HINTERGRUND DER ERFINDUNG

Grillgeräte der eingangs genannten Gattung erlauben besondere Geschmacksaromen und ein Grillgut, das innen zart und saftig bleibt, während an der Außenseite eine perfekte Kruste entsteht. Dies wird durch ein Zusammenziehen der Fleischfasern an der Oberfläche bei großer Oberhitze erreicht, da dadurch Säfte und Aromen im Inneren des Fleisches versiegelt und erhalten bleiben.

Ein gattungsgemäßes Grillgerät ist aus DE 10 2017 102 892 A1 bekannt. Dieses Grillgerät weist ein Gehäuse mit Grillinnenraum auf, welcher durch eine offene Frontseite zugänglich ist und bei welchem an der Decke einen Gasbrenner angeordnet ist. Der Grillinnenraum ist möglichst einfach gestaltet, um die Reinigung desselben leicht durchführen zu können, wobei zusätzlich auch das Außengehäuse entfernt werden kann. Unterhalb des Grillinnenraums befindet sich ein Staufach für Grillutensilien, welches gleichzeitig einen Hitzeschutz zwischen Tischplatte und Innengehäuse bildet. Außerhalb des Grillinnenraums befindet sich eine Haltevorrichtung, welche mit dem Grillrost über einen Rostträger verbunden ist.

Ein ähnliches Oberhitze-Grillgerät ist auch aus DE 20 2015 101 826 U1 bekannt, welches trotz der hohen Temperaturen möglichst einfach und sicher zu handhaben ist und wie das oben genannte Grillgerät über einen Gasbrenner verfügt, der mithilfe einer extern angeschlossenen Gasflasche mit Gas versorgt wird.

In US 7,117,866 B2 wird ein Grillgerät offenbart, das einen an der Deckenwand angebrachten Heizstrahler umfasst, wobei die offene Frontseite des Grillinnenraums sich mit einer Tür (optional mit Fenster) verschließen lässt, wobei das Grillgerät zum Austritt von Rauchgasen einige Lüftungsöffnungen aufweist.

Im Gegensatz zu den oben genannten, bekannten Grillgeräten findet das in US 7,117,866 B2 beschriebene Grillgerät aufgrund des geschlossenen Grillinnenraums seine Verwendung hauptsächlich im Garen des Grillguts. Durch die an der Decke angebrachte Wärmequelle wird ein gleichmäßiges Garen des Grillguts ermöglicht, ohne ein Austrocknen und Verbrennen der Grillsäfte, wie bei herkömmlichen Grillgeräten mit bodenseitiger Wärmequelle.

Bei den bekannten oben genannten Oberhitze-Grillgeräten muss das Grillgut im Allgemeinen vorbehandelt werden, um beste Grillergebnisse zu erreichen. Die hohe Oberhitzentemperatur ermöglicht den letzten Feinschliff des Grillguts, wobei vor allem bei Steaks ein Vorgaren erforderlich ist. Eine Möglichkeit zum Vorgaren bietet hier das Sous-Vide Garen, bei welchem ein Steak in einen Vakuumbeutel verschweißt und in einem Wasserbad oder Dampfgarer bei ca. 60 °C gegart wird. Um mit einem Oberhitze-Grillgerät das gewünschte Grillgut perfekt zubereiten zu können, benötigt man demnach noch einige zusätzliche Geräte und Verfahrensschritte.

Ein weiterer Oberhitzegrill mit einer Nachgarschublade im unteren Bereich des Garraumes ist aus der DE 102016008103 A1 bekannt.

Die bekannten Grillgeräte, welche mit großer Oberhitze arbeiten, werde mit Gasflaschen betrieben und können daher nicht leicht transportiert und nicht in Innenräumen verwendet werden. Die Lagerung großer Gasflaschen erfordert außerdem Sicherheitsmaßnahmen. Schließlich muss eine leere Gasflasche von einem Fachbetrieb wieder befüllt werden, sodass das Grillgerät währenddessen nicht verwendet werden kann.

### KURZE BESCHREIBUNG DER ERFINDUNG

Der Erfindung liegt die Aufgabe zugrunde, ein flexibles und überall einsetzbares Oberhitze-Grillgerät bereitzustellen, mit welchem ohne zusätzliche Geräte das gewünschte Grillgut perfekt zubereitet werden kann.

Gelöst wird diese Aufgabe durch ein Grillgerät zum Garen und Grillen von Grillgut gemäß Anspruch 1.

Die Frontklappe gibt beim Öffnen den unteren Bereich der Frontseite frei.

Gemäß der Erfindung ist vorgesehen, dass entlang des ersten Paars im Wesentlichen horizontal ausgerichteter Führungen, welche an der ersten und zweiten Seitenwand jeweils auf gleicher Höhe angeordnet sind, ein Schubfach (oberes Schubfach) mit Grillgut eingebracht wird. Mithilfe der Frontklappe, die den oberen Bereich der Frontseite offen lässt und den unteren Bereich der Frontseite verschließt, wird im Grillinnenraums ein Thermoeffekt erzielt, welcher das Grillgut im oberen Schubfach bei hoher Oberhitze in kürzester zeit gart.

In einer Ausführungsvariante ist vorgesehen, dass die Frontklappe mittels eines Magnetverschlusses am Außengehäuse verschließbar ist.

Erfindungsgemäß ist ein zweites Paar im Wesentlichen horizontal ausgerichteter Führungen vorgesehen, welche an der ersten und zweiten Seitenwand jeweils auf gleicher Höhe und unterhalb des ersten Paares Führungen angeordnet sind, wobei das zweite Paar Führungen im unteren Bereich der Frontseite angeordnet sind. Bevorzugt ist das zweite Paar Führungen bezogen auf die Frontklappe unterhalb der Mitte der Höhe der Frontklappe angeordnet.

Bei dieser erfindungsgemäßen Ausführungsform kann entlang des ersten Paars im Wesentlichen horizontal ausgerichteter Führungen, welche an der ersten und zweiten Seitenwand jeweils auf gleicher Höhe angeordnet sind ein erstes, oberes Schubfach mit Grillgut eingebracht werden und es kann entlang des zweiten Paars im Wesentlichen horizontal ausgerichteter Führungen, welche jeweils auf gleicher Höhe und unterhalb des ersten Paares an der ersten und zweiten Seitenwand angeordnet sind ein zweites, unteres Schubfach mit Grillgut eingebracht werden. Während das Grillgut im oberen Schubfach bei extremer Oberhitze gegart wird, wird gleichzeitig das Grillgut im unteren Schubfach sehr sanft bei niedriger Temperatur vorgegart. Dieses Vorgaren macht einen Sous-Vide Garer für das üblicherweise notwenige Vorgaren des Grillgutes komplett überflüssig. Es hat sich also herausgestellt, dass die Kombination von Vorgaren im unteren Schubfach und Hauptgaren im oberen Schubfach die umständliche Handhabung des Sous-Vide Garens, bei welcher das Grillgut zunächst in eine Folie eingeschweißt werden muss und in einem Wasserbad zeitaufwändig vorgegart werden muss, überflüssig macht. Die thermischen Verhältnisse im Grillinnenraum sind so, dass sich ein Temperaturgradient einstellt, mit dem das Vorgaren im unteren Schubfach genauso sanft aber um ein Vielfaches rascher als im Sous-Vide Garer erfolgen kann. Es hat sich überraschend herausgestellt, dass eine Vorgarzeit im unteren Schubfach, die der Hauptgarzeit im oberen Schubfach entspricht, ausreicht. Es ist daher möglich, gleichzeitig im unteren Schubfach vorzugaren und im oberen Schubfach hauptzugaren. Sobald das im oberen Schubfach gegarte Grillgut fertig ist, kann es entnommen werden und das im unteren Schubfach vorgegarte Grillgut kann zum eigentlichen Garen in das obere Schubfach gelegt werden. In das frei gewordene untere Schubfach kann wiederum Grillgut zum Vorgaren eingelegt werden. Dieser Vorgang kann bis zum Grillende wiederholt werden.

Diese Temperaturverhältnisse zum gleichzeitigen Vorgaren und Hauptgaren haben sich dabei im Grillinnenraum nur eingestellt, wenn der untere Bereich der Frontseite von der Frontklappe abgedeckt ist und der obere Bereich der Frontseite offen bleibt, wobei im unteren Bereich das Vorgaren und im oberen Bereich das Hauptgaren erfolgt.

Die Führungen können dabei z.B. Schienen sein. Das Schubfach kann ein Rost oder Grillblech sein, d.h. sowohl das obere Schubfach als auch das untere Schubfach können ein Rost oder Grillblech sein.

Bevorzugt ist vorgesehen, dass die Frontklappe nach vorne klappbar ist, um die Frontklappe zu öffnen. Dabei kann die Frontklappe mit einem Scharnier an der Bodenplatte schwenkbar befestigt angebracht sein. Die Drehachse des Scharnies ist dabei im Wesentlichen horizontal ausgerichtet.

Im ausgeklappten Modus kann die Frontklappe eine Verlängerung der Bodenplatte bilden. Dadurch bietet die Frontklappe auch geöffnet einen Schutz vor der Strahlungswärme aus dem Grillinnenraum, welche, anstatt direkt auf die Tischplatte zu treffen, auf die Frontklappe trifft. Erleichtert wird dies, wenn die Frontklappe einen Griff aufweist, wobei die Tiefe des Griffs im Wesentlichen dem Abstand der Drehachse des Scharniers vom Boden entspricht.

Erfindungsgemäß weist die Frontklappe eine Größe auf, dass sie im geschlossenen Zustand zumindest das untere Drittel der Frontseite abdeckt. Vorzugsweise sind maximal die unteren beiden Drittel der Frontseite abgedeckt, wenn die Frontklappe geschlossen ist. Besonders bevorzugt weist die Klappe eine Höhe auf, sodass maximal die untere Hälfte der Frontseite abgedeckt ist. Eine derartige Ausgestaltung der Frontklappe verbessert die Temperaturverläufe im Grillinnenraum derart, dass im unteren Bereich ideale Temperaturen zum Vorgaren und im oberen Bereich ideale Temperaturen zum Hauptgaren herrschen.

Das Außengehäuse des erfindungsgemäßen Grillgeräts umfasst zumindest vorzugsweise zwei sich gegenüberliegende Außenseitenwände und eine Außendeckenwand, sowie gegebenenfalls eine Außenrückwand. An der Frontseite ist das Außengehäuse offen.

In einer weiteren Ausführungsvariante umfasst das Grillgerät eine am Außengehäuse angebrachte Frontverkleidung, wobei an der Oberseite der Frontverkleidung eine Blende den Heizstrahler verdeckt. An der Unterseite der Frontverkleidung kann die klappbare Frontklappe angebracht sein. Daher ist bevorzugt eine an der Frontseite angebrachte Blende vorgesehen, welche den Heizstrahler zumindest teilweise abdeckt. Der übrige obere Bereich der Frontseite bleibt - abgesehen von den Seitenrändern - im Wesentlichen offen.

In einer bevorzugten Ausführungsvariante befindet sich im vorzugsweise unteren Drittel des Grillinnenraums hinter der aufklappbaren Frontklappe an der ersten und zweiten Seitenwand jeweils mindestens eine Führungsschiene. Diese Führungsschienen erlauben das Einschieben eines Schubfachs zum Grillen in dem Bereich hinter der Frontklappe, wo der Thermoeffekt erzielt wird. Dort kann einerseits noch nicht aufgetautes oder kühles Grillgut schon während der Aufheizphase des Grillgeräts im Thermobereich angetaut werden und andererseits das Grillgut ähnlich dem Sous-Vide Garen für die gewünschte Dauer vorgegart werden. Um die charakteristische Kruste zu bekommen, muss das Grillgut danach noch kurze Zeit auf einem Grillrost in einer der oberen Führungsschienen in der Nähe des Heizstrahlers gegrillt werden.

Des Weiteren kann hinter der Außenrückwand die zumindest eine Gaszuleitung angebracht sein, wobei sich die zumindest eine Gaszuleitung durch ein Ventil öffnen und schließen lässt, wobei ein nachgeschalteter Drehschalter die an den Heizstrahler durchgelassene Gasmenge und somit die Grill-Temperatur reguliert.

Bevorzugt erfolgt die Zündung des Heizstrahlers elektrisch per Knopfdruck, wobei die Zündvorrichtung beispielsweise eine Piezozündung ist. Der Schalter für die elektrische Zündvorrichtung befindet sich in einer Ausführungsvariante an einer auf der Rückseite der Außendeckenwand anbringbaren Gasanschluss-Abdeckung. Zusätzlich weist die Gasanschluss-Abdeckung noch eine Auslassung für den die Grill-Temperatur bzw. die Gasmenge regulierenden Drehschalter auf.

Zum Entweichen von Verbrennungsgasen, Qualm oder Rauch aus dem Grillinnenraum können alle Wände des Außengehäuses und/oder die Gasanschluss-Abdeckung Lüftungsöffnungen aufweisen. Diese Lüftungsöffnungen können in Form von Lüftungsschlitzen ausgeführt sein.

Bevorzugt ist vorgesehen, dass der Heizstrahler ein Gasbrenner ist, welcher mit einer Gaszuleitung verbunden ist, wobei die Gaszuleitung einen Anschluss für eine Gaskartusche aufweist, welcher zwischen dem Außengehäuse und der Rückwand des Innengehäuses angeordnet ist.

Dabei kann hinter der Außenrückwand die zumindest eine Gaszuleitung angebracht sein, wobei sich die zumindest eine Gaszuleitung durch ein Ventil öffnen und schließen lässt, wobei ein nachgeschalteter Drehschalter zusätzlich die an den Heizstrahler durchgelassene Gasmenge und somit die Grill-Temperatur reguliert.

Weiters kann eine öffenbare Abdeckung des Außengehäußes im Bereich des Anschlussventils vorgesehen sein.

Außerdem kann das Grillgerät einen integrierte Zeitschalter zur punktgenauen Zubereitung des Grillguts umfassen. Der Zeitschalter kann zusätzlich den Heizstrahler aktivieren bzw. deaktivieren, um eine zu lange Hitzezufuhr auf das Grillgut zu vermeiden. Bevorzugt lassen sich mit dem Zeitschalter mindestens zwei verschiedene Zeitdauern regeln, da bei gleichzeitiger Verwendung des Thermobereichs hinter der Frontklappe und des direkten Oberhitze-Grillers im oberen Bereich des Grillinnenraums die Grillgüter für unterschiedliche Zeiten im Grillgerät verbleiben müssen.

Um ein möglichst einfaches Transportieren des Grillgeräts zu ermöglichen, kann sich an der Außendeckenwand ein Tragegriff befinden.

In einer Ausführungsvariante ist das Grillgerät gekennzeichnet durch zumindest zwei Anschlüsse für Gaskartuschen, wobei die beiden Anschlüsse an der Außenseite der Rückwand des Innengehäuses angeordnet sind, wobei eine Gaszuleitung die Anschlüsse mit dem Heizstrahler verbindet.

Die Anordnung der Anschlüsse ermöglicht eine kompakte Bauweise. Durch das Vorhandensein von zwei Anschlüssen kann das Grillgerät ausfallsicher betrieben werden, da zwischen zwei Gaskartuschen hin und her gewechselt werden kann.

Erfindungsgemäß ist das Grillgerät bzw. der Heizstrahler also mittels zumindest zwei Gaskartuschen betreibbar und der Anschluss mit integriertem Anschlussventil für die Gaskartuschen ist direkt hinter der Deckenwand angebracht.

In einer Ausführungsvariante ist vorgesehen, dass jeder Anschluss ein Anschlussventil für die Gaskartuschen aufweist, welcher mit der Gaszuleitung verbunden ist.

Bevorzugt ist dabei vorgesehen, dass jeder Anschluss direkt hinter der Deckenwand sitzt.

An der Oberseite der Außenrückwand kann eine Anschlussplatte zur Befestigung des Anschlusses für die Gaskartuschen angebracht sein. Zusätzlich können die zumindest zwei Gaskartuschen durch Löcher in der Bodenplatte hinter der Rückseite der Rückwand geschoben werden und so am Anschluss fixiert werden, wobei die Löcher in der Bodenplatte nach der Fixierung der Gaskartuschen mittels Bodenhalterungen schließbar sind. Die Gaskartuschen sind dann stabil hinter der Rückwand befestigt und zusätzlich noch jeweils mit einer an der Bodenplatte angebrachten Abdeckblende abgeschirmt..

Das Grillgerät kann eine Anschlussplatte zur Befestigung der Anschlussventile für die Gaskartuschen aufweisen. Die Anschlussplatte kann an z.B. im oberen Bereich der Rückwand oder an der Unterseite der Außenrückwand angebracht sein.

Wenn das Außengehäuse des erfindungsgemäßen Grillgeräts eine Außenrückwand umfasst, ist diese hinter der Rückwand des Innengehäuses angeordnet. Die beiden Anschlüsse können dann zwischen Außenrückwand und Rückwand des Innengehäuses angeordnet sein oder sie können hinter Außenrückwand und Rückwand des Innengehäuses angeordnet sein.

Die beiden Anschlüsse können in einer Ausführungsvariante zwischen zumindest einer Rückabdeckung und der Außenseite der Rückwand des Innengehäuses angeordnet sein.

Die Gaszufuhr an den Heizstrahler ist vorzugsweise durch einen Regler regelbar, welcher die aus den Gaskartuschen durchgelassene Gasmenge zum Gasbrenner regelt. Gegebenenfalls lässt sich die Gasmenge mithilfe des Anschlussventils regeln lässt, wobei ein nachgeschalteter Drehschalter die Gasmenge reguliert. Alternativ dazu lässt sich die Gaszufuhr mithilfe des Anschlussventils ein- und ausschalten, wobei ein nachgeschalteter Drehschalter die an den Heizstrahler durchgelassene Gasmenge und somit die Grill-Temperatur reguliert.

Die eben beschriebene Verbauung und Verwendung der Gaskartuschen erlaubt daher den flexiblen Transport des Grillgeräts, ohne ständig eine Gasflasche anzuschließen und abzumontieren. Außerdem kann das Grillgerät mit Gaskartuschen auch in Innenräumen verwendet werden.

Bei den Gaskartuschen kann es sich in einer Ausführungsvariante um Multigaskartuschen handeln.

In einer Ausführungsvariante ist vorgesehen, dass die zumindest zwei Gaskartuschen durch Löcher in der Bodenplatte hinter der Außenrückwand schiebbar und so am jeweiligen Anschluss fixierbar sind, wobei die Löcher in der Bodenplatte nach Fixierung der Gaskartuschen mittels Bodenhalterungen schließbar sind.

Weiters kann vorgesehen sein, dass hinter den zumindest zwei Gaskartuschen jeweils eine Abdeckblende anbringbar ist.

Das Grillgerät kann weiters gekennzeichnet sein durch einen Wechselschalter, mit welchem die Verbindung zwischen den Anschlussventilen und der Gaszuleitung gewechselt werden kann. Auf diese Art und Weise ist es möglich, wenn eine Gaskartusche leer ist, auf die zweite Gaskartusche als Gasversorgung umzustellen und es kann ohne Grillunterbrechung sofort weiter gegrillt werden.

In einer Ausführungsvariante ist eine Gasanschluss-Abdeckung vorgesehen, wobei die Gasanschluss-Abdeckung Auslassungen für den Wechselschalter aufweist. Die Gasanschluss-Abdeckung kann z.B. an der Rückseite der Außendeckenwand angebracht sein. Die Gasanschluss-Abdeckung kann Auslassungen für einen Schalter für die elektrische Zündvorrichtung aufweisen.

In einer weiteren Ausführungsvariante umfasst das Grillgerät eine am Außengehäuse angebrachte Frontverkleidung, wobei an der Oberseite der Frontverkleidung eine Blende den Heizstrahler verdeckt. An der Unterseite der Frontverkleidung kann die klappbare Frontklappe angebracht sein. Daher ist bevorzugt eine an der Frontseite angebrachte Blende vorgesehen, welche den Heizstrahler abdeckt. Der übrige obere Bereich der Frontseite bleibt - abgesehen von den Seitenrändern - im Wesentlichen offen.

Die ausgeklappte Frontklappe kann dabei eine Verlängerung der Bodenplatte bilden und schützt somit die Tischplatte, auf welcher das Grillgerät steht, vor der Strahlungswärme des Heizstrahlers.

Außerdem ist im unteren Bereich des Grillinnenraums hinter der aufklappbaren Frontklappe an der ersten und zweiten Seitenwand jeweils mindestens eine Führungsschiene angebracht, um den Thermoeffekt der Frontklappe ausnutzen zu können. An den Führungsschienen kann ein Grillrost eingeschoben werden und daher ein Grillgut im Thermobereich hinter der Frontklappe entweder angetaut oder vorgegart werden. Auch kann gegrilltes Grillgut zum Rasten in diesen Bereich gelegt werden.

In einer bevorzugten Ausführungsvariante umfasst das Grillgerät eine elektrische Zündvorrichtung, welche vorzugsweise eine Piezozündung ist. Die Zündvorrichtung wird per Knopfdruck mittels eines Schalters betätigt, der sich z.B. an einer an der Rückseite der Außendeckenwand anbringbaren Gasanschluss-Abdeckung befindet. Zusätzlich weist die Gasanschluss-Abdeckung eine Auslassung für den die Grill-Temperatur bzw. die Gasmenge regulierenden Drehschalter auf.

Zum Entweichen von Verbrennungsgasen, Qualm oder Rauch aus dem Grillinnenraum können einige oder alle Wände des Außengehäuses, die Gasanschluss-Abdeckung, sowie die Abdeckblenden Lüftungsöffnungen aufweisen. Diese Lüftungsöffnungen können in Form von Lüftungsschlitzen ausgeführt sein.

### AUSFÜHRLICHE BESCHREIBUNG DER ERFINDUNG

Weitere Vorteile und Details der Erfindung werden nachfolgend anhand der folgenden Figuren und Figurenbeschreibungen erläutert.
Fig. 1 zeigt eine Vorderansicht eines erfindungsgemäßen Grillgeräts.
Fig. 2 zeigt eine Rückansicht des erfindungsgemäßen Grillgeräts von Fig. 1.
Fig. 3 zeigt eine Seitenansicht des erfindungsgemäßen Grillgeräts von Fig. 1.
Fig. 4 zeigt eine perspektivische Ansicht des Grillgeräts von Fig. 1.
Fig. 5 zeigt eine Explosionsdarstellung des erfindungsgemäßen Grillgeräts von Fig. 1.
Fig. 6 zeigt eine perspektivische Ansicht eines zweiten Ausführungsbeispiels eines Grillgeräts.

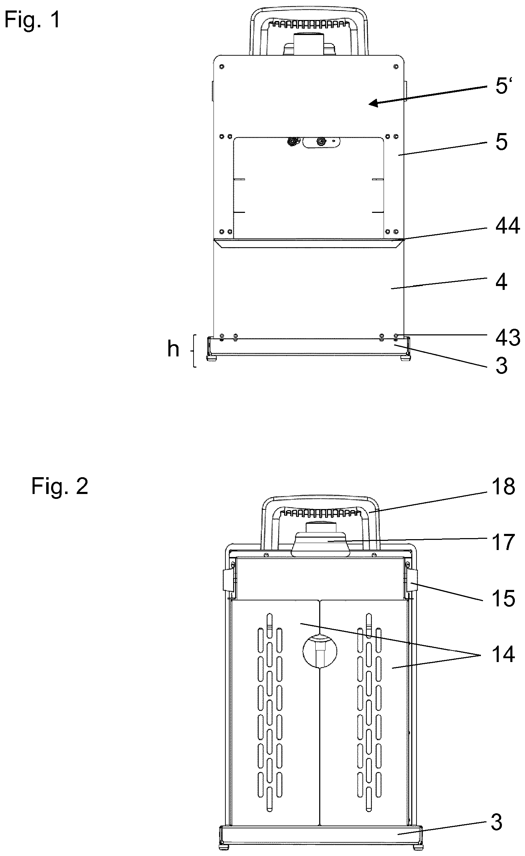

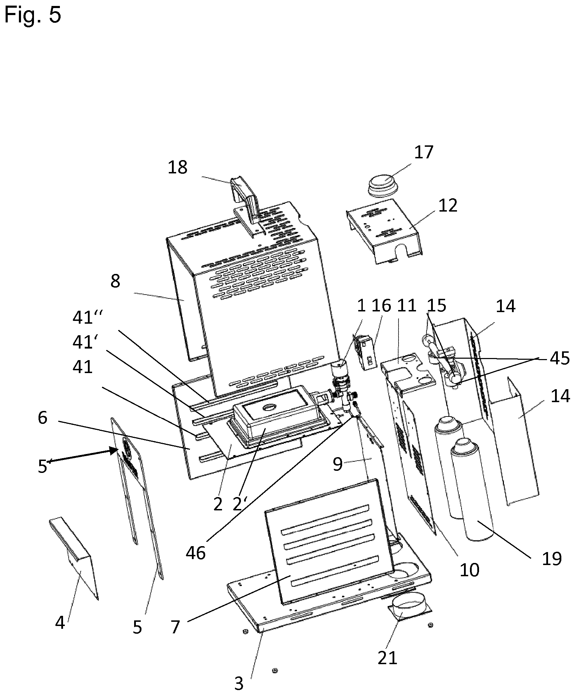

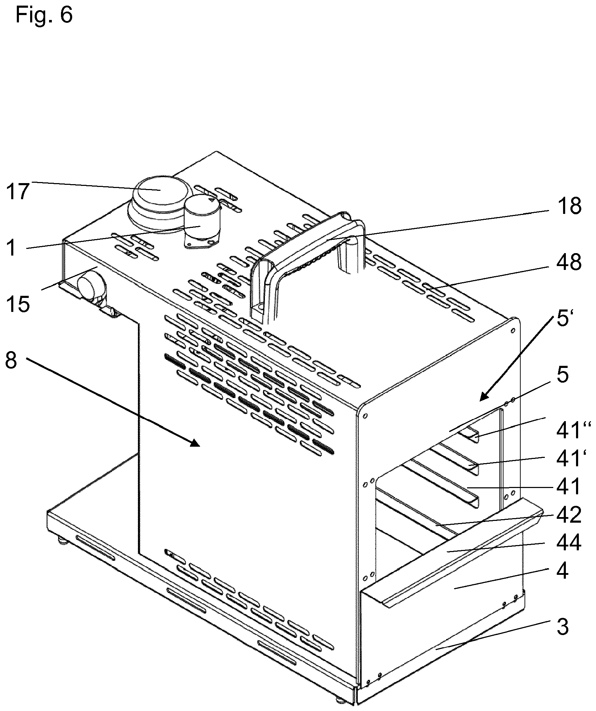

Da die Figuren 1 bis 5 dasselbe Ausführungsbeispiel zeigen und Fig. 5 in der Explosionsdarstellung sämtliche Einzelkomponenten mit Bezugszeichen zeigt, wird hilfsweise auf Fig. 5 verwiesen, denn es werden in den vorhergehenden Figuren aus Übersichtlichkeitsgründen nicht bei alle sichtbaren Komponenten die Bezugszeichen eingezeichnet. Das Ausführungsbeispiel von Fig. 6 unterscheidet sich vom Ausführungsbeispiel der Fig. 1 bis 5 in Details, wobei der Aufbau ansonsten im Wesentlichen derselbe ist. Daher wird auch bei der Figurenbeschreibung der Fig. 6 auf die Fig. 1 bis 5 verwiesen.

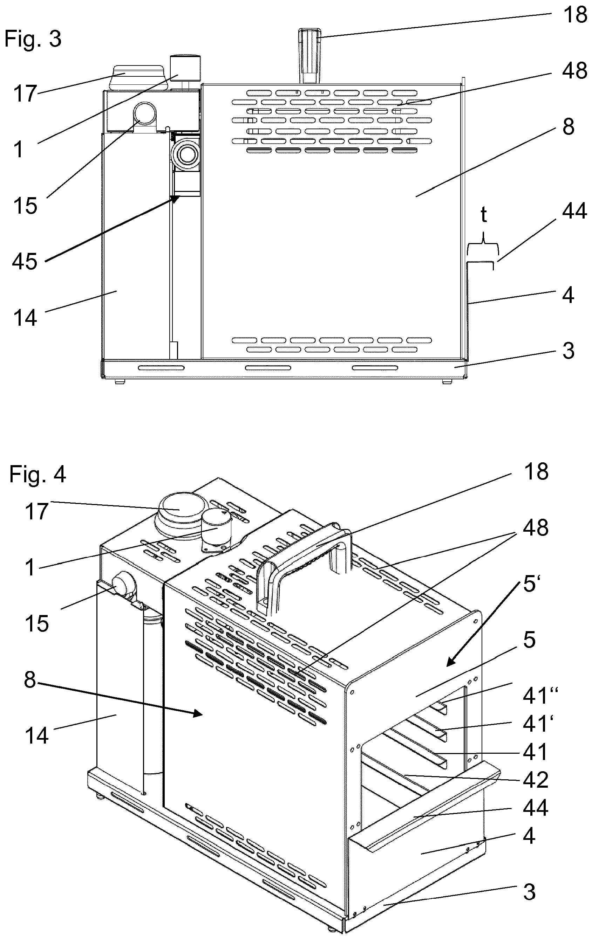

Die Figuren 1 bis 5 zeigen ein Grillgerät zum Garen und Grillen von Grillgut, umfassend ein Außengehäuse 8 und ein Innengehäuse, welches den Grillinnenraum begrenzt. Das Innengehäuse umfasst und eine erste Seitenwand 6, eine zweite Seitenwand 7, die der ersten Seitenwand 6 gegenüberliegt, eine Deckenwand 2, eine Rückwand 9 und eine Bodenplatte 3 (Fig. 3). Der Grillinnenraum ist von der Frontseite zugänglich.

Weiters ist ein Heizstrahler 2' erkennbar, welcher in die Deckenwand 2 des Grillinnenraums eingebracht ist. Beim Heizstrahler 2' handelt es sich um einen Gasbrenner.

Im Grillinnenraum ist ein erstes Paar im Wesentlichen horizontal ausgerichteter Führungen 41 in Form von Führungsschienen vorhanden, welche an der ersten und zweiten Seitenwand 6, 7 jeweils auf gleicher Höhe angeordnet sind. Diese Führungen nehmen ein oberes Schubfach (nicht gezeigt) für Grillgut auf. Zu optimalen Positionierung des Grillguts sind im Ausführungsbeispiel noch weitere Paare an Führungsschienen 41', 41" vorhanden, die allesamt im oberen, stets offenen Bereich der Frontseite angeordnet sind.

Weiters ist eine schwenkbare Frontklappe 4 vorhanden, welche im geschlossenen Zustand den unteren Bereich der Frontseite verschließt und den oberen Bereich der Frontseite stets offen lässt. Die Frontklappe 4 deckt im geschlossenen Zustand etwa die Hälfte der Frontseite ab. Die Frontklappe 4 gibt beim Öffnen den unteren Bereich frei. Im geschlossenen Zustand ist die Frontklappe mittels eines Magnetverschlusses am Außengehäuse 8 verschlossen bzw. magnetisch mit dem Außengehäuse 8 verbunden. Das erste Paar Führungen 41, 41', 41" ist im oberen Bereich der Frontseite angeordnet, der stets offen ist.

Zustätzlich ist ein zweites Paar im Wesentlichen horizontal ausgerichteter Führungen 42 erkennnbar. Dieses zusätzliche Paar an Führungen 42 ist ebenfalls als Führungsschienen ausgebildet, wobei diese an der ersten und zweiten Seitenwand 6, 7 jeweils auf gleicher Höhe und unterhalb des ersten Paares Führungen 41, 41', 41" angeordnet sind. Das zweite Paar Führungen 42 im unteren Bereich der Frontseite angeordnet sind. Das zweite Paar Führungen 42 ist im unteren Drittel des Grillinnenraums hinter der aufklappbaren Frontklappe 4 an der ersten und zweiten Seitenwand 6, 7 angebracht. Auf dem zweiten Paar Führungen 42 wird das untere Schubfach (nicht gezeigt) für Grillgut gelagert geführt.

Die Frontklappe 4 ist nach vorne klappbar und mit einem horizontal angeordnetem Scharnier 43 an der Bodenplatte 3 angebracht. Die Frontklappe 4 bildet im geöffnete Zustand eine Verlängerung der Bodenplatte 3, indem ein vorstehender Griff 44 vorgesehen ist, der eine Tiefe t aufweist, die der Höhe h der Drehachse des Scharniers 43 über den Boden entspricht.

Weiters ist eine an der Frontseite angebrachte Blende 5' erkennbar, welche den Heizstrahler 2' abdeckt. Die Blende 5' ist in einer angebrachte Frontverkleidung 5 integriert, wobei an der Oberseite der Frontverkleidung 5 die Blende 5' den Heizstrahler 2' verdeckt.

Es sind zwei Anschlüsse 45 für Gaskartuschen 19 vorhanden, wobei die beiden Anschlüsse 45 zwischen den Rückabdeckungen 14 und der Außenseite der Rückwand 9 des Innengehäuses angeordnet sind, wobei eine Gaszuleitung 46 die Anschlüsse 45 mit dem Heizstrahler 2' verbindet. Jeder Anschluss 46 weist ein Anschlussventil 15 für die Gaskartuschen 19 auf, welche mit der Gaszuleitung 46 verbunden sind. Außerdem ist jeder Anschluss 45 direkt neben dem hinteren Ende der Deckenwand 2 angeordnet.

Der Gasbrenner ist mit einer Gaszuleitung 46 verbunden ist, wobei die Gaszuleitung 46 Anschlüsse 15 für zwei Gaskartuschen 19 aufweist, zwischen den Rückabdeckungen 14 und der Außenseite der Rückwand 9 des Innengehäuses, wobei zwischen Rückwand 9 und Gaskartuschen 19 noch die Außenrückwand 10 des Außengehäuses vorgesehen ist. Die Außenrückwand 10 des Außengehäuses kann aber auch nach den Gaskartuschen 19 vorgesehen sein und gegebenenfalls mit der Rückabdeckung 14 zusammenfallen.

Hinter der Rückwand 9 befindet sich die zumindest eine Gaszuleitung 46, wobei sich die zumindest eine Gaszuleitung 46 durch ein Ventil öffnen und schließen lässt. Ein Drehschalter 1 ermöglicht zusätzlich die an den Heizstrahler 2' durchgelassene Gasmenge und somit die Grill-Temperatur zu regulieren. Die Gaszufuhr an den Heizstrahler 2' lässt sich durch den Drehschalter 1 regeln, welcher die aus den Gaskartuschen 19 durchgelassene Gasmenge zum Heizstrahler 2' regelt.

Erkennbar ist außerdem die öffenbare Abdeckung 12 des Außengehäußes 8 im Bereich der Anschlüsse 45, um Zugang zu den Anschlüssen 45 zu ermöglichen. Eine elektrische Zündvorrichtung 16 ist für die Gasentzündung im Heizstrahler 2' vorgesehen, wobei die Zündvorrichtung 16 eine Piezozündung ist. An der Rückseite der Außendeckenwand 2 ist die Gasanschluss-Abdeckung 12 mit Auslassungen für den Drehschalter 1 für die elektrische Zündvorrichtung 16 und den Zeitschalter 17 vorgesehen.

Am Außengehäuse 8 sind Lüftungsöffnungen 48 (Schlitze) vorgesehen.

An der Außendeckenwand ist außerdem ein Tragegriff 18 vorhanden.

Das Grillgerät weist eine Anschlussplatte 11 zur Befestigung der Anschlüsse 45 und der Anschlussventile 15 für die Gaskartuschen 19 auf. Die Anschlussplatte 11 ist an der Oberseite der Außenrückwand 10 angebracht ist.

Die beiden Gaskartuschen 19 können durch Löcher in der Bodenplatte 3 hinter der Außenrückwand 10 geschoben werden und so am jeweiligen Anschluss 15 fixiert werden. Die Löcher 49 in der Bodenplatte 3 sind nach Fixierung der Gaskartuschen 19 mittels Bodenhalterungen 21 schließbar.

Hinter den zwei Gaskartuschen 19 ist jeweils eine Rückabdeckung 14 angebracht, welche die Gaskartuschen 19 abdeckt. Es kann neben jeweils einer Rückabdeckung 14 auch eine gemeinsame Rückabdeckung 14 für beide Gaskartuschen 19 vorgesehen sein.

Optional ist außerdem ein Wechselschalter vorgesehen, mit welchem die Verbindung zwischen den Anschlussventilen 15 und der Gaszuleitung gewechselt werden kann.

Eine an der Rückseite der Außendeckenwand angebrachte Gasanschluss-Abdeckung 12 weist die Gasanschluss-Abdeckung 12 mit Auslassungen für den Wechselschalter 50 auf.

Wie in den Fig. 1 bis 5 dargestellt betrifft die Erfindung ein kompaktes Oberhitze-Grillgerät, welches vorzugsweise mit zumindest zwei Gaskartuschen 19 betrieben wird. Mithilfe des Tragegriffs 18 kann das Grillgerät flexibel transportiert werden und anhand der Verwendung der Gaskartuschen 19 anstatt einer Gasflasche auch in Innenräumen verwendet werden. Aufgrund seiner Größe kann das Grillgerät auf nahezu jedem beliebigen Tisch bzw. Beistelltisch platziert werden. Das Außengehäuse 8, die Frontklappe 4 und die Bodenplatte 3 schützen dabei die Tischplatte vor der Strahlungswärme des Heizstrahlers 2', welcher in die Deckenwand 2 des Grillinnenraums integriert ist. Die Wände des Außengehäuses 8, bestehend aus zwei Außenseitenwänden, einer Außendeckenwand und einer Außenrückwand 10, weisen einige Lüftungsschlitze auf, damit Verbrennungsgase und dergleichen aus dem Grillinnenraum entweichen können.

Wie in Fig. 4 ersichtlich, befindet sich an der Oberseite des Grillgeräts hinter der Außendeckenwand des Außengehäuses 8 an der Gasanschluss-Abdeckung 12 (mit Lüftungsöffnungen) ein Drehschalter 1 zur Regelung der Gaszufuhr sowie ein weiterer Schalter 17. Der Drehschalter 1 steuert auch die elektrische Zündvorrichtung 16, welche zum Beispiel eine Piezozündung sein kann. Das heißt der Heizstrahler 2' kann per Knopfdruck mithilfe des Schalters 1 gezündet werden und es werden keine zusätzlichen Zündmittel gebraucht.

Mit dem Drehschalter 1 lässt sich die Menge des an den Heizstrahler 2' geleiteten Gases steuern. Bei maximaler Gaszuleitung erreicht der Heizstrahler 2' eine Temperatur von ca. 800 °C. Die Temperaturregelung des erfindungsgemäßen Oberhitze-Grillgeräts erfolgt daher einerseits über den Drehschalter 1 und den damit gesteuerten Gasfluss, welcher die Temperatur des Heizstrahlers 2' reguliert.

Andererseits erfolgt eine Temperaturregelung auch über die in Fig. 5 dargestellten Führungsschienen 41, 41', 41" an der ersten Seitenwand 6 und der zweiten Seitenwand 7 im Grillinnenraum. An diesen Führungsschienen 41, 41', 41" lässt sich der Grillrost einschieben. Durch die unterschiedlichen Höhen der Führungsschienen 41, 4 1', 41" ist die Entfernung des Grillguts zum Heizstrahler 2' verstellbar. Somit lässt sich einfach der gewünschte Bräunungsgrad und Gargrad des Grillguts erreichen.

Der Grillinnenraum ist wie in Fig. 5 gezeigt außerdem durch eine Bodenplatte 3 und eine Rückwand 9 begrenzt. An der offenen Frontseite befindet sich eine Frontverkleidung 5, welche am Außengehäuse 8 angebracht werden kann. Im oberen Bereich der Frontverkleidung 5 bedeckt eine Blende die Deckenwand 2 mit dem Heizstrahler 2`.

Ein besonderes Merkmal des erfindungsgemäßen Grillgeräts ist die am Boden der Frontseite an der Bodenplatte 3 mit Scharnieren befestigte Frontplatte 4, welche zugeklappt zumindest das untere Drittel maximal die untere Hälfte der Frontseite bedeckt. Im aufgeklappten Zustand, das heißt bei gänzlich offener Frontseite, bildet die Frontplatte 4 eine Verlängerung der Bodenplatte 3 und schützt damit die Tischplatte vor Strahlungswärme und Fettspritzern. Im geschlossenen Zustand ermöglich die Frontplatte 4 einen Thermoeffekt im unteren Bereich des Grillinnenraums. In diesem Thermobereich kann schon während der Aufheizphase des Grillgeräts, welche zwischen 5 und 8 Minuten dauern kann, nicht aufgetautes Grillgut angetaut werden. Besonders hervorzuheben ist, dass nach der Aufheizphase in diesem Thermobereich, welcher eine Temperatur von ca. 200 °C hat, das Grillgut vorgegart werden kann. Ähnlich dem Sous-Vide Garen wird das Grillgut somit auf seine Kerntemperatur gebracht, ohne komplett durchgegart zu werden. Danach wird das Grillgut auf einem Grillrost in eine der oberen Führungsschienen geschoben und erhält in wenigen Minuten anhand der Maillard Reaktion unter hoher Hitze eine braune, knusprige Oberfläche. Bekannte Grillgeräte benötigen für eine solche Zubereitung jedoch weitere Geräte zum Vorgaren, da das Oberhitze-Grillgerät tatsächlich nur die Funktion des Oberhitze-Grillens übernimmt. Das erfindungsgemäße Oberhitze-Grillgerät vereint daher die Merkmale mehrerer Geräte in einem Gerät und ermöglich zusätzlich noch ein schnelles, einfaches und effektives Antauen von tiefgefrorenem Grillgut.

Bevorzugt wird auf der Bodenplatte 3 eine Auffangschale zum Auffangen der vom Grillgut abgesonderten Säfte und Fette platziert. Diese können dann auch weiter zu beispielsweise Saucen verarbeitet werden. Die Auffangschale erleichtert auch die Reinigung des Grillinnenraums.

An der Oberseite der Außenrückwand 10 ist eine Anschlussplatte 11 zur Befestigung des Anschlusses 15 für die Gaszuleitung angebracht. Bevorzugt handelt es sich bei der Gasquelle um zumindest zwei Gaskartuschen 19, welche an der Hinterseite des Grillgeräts verbaubar sind. Dafür können an der Unterseite der Bodenplatte 3 hinter der Außenrückwand 10 Bodenhalterungen 21 entfernt werden und die Gaskartuschen 19 durch die so geöffneten Löcher in der Bodenplatte 3 geschoben und am Anschluss 15 befestigt werden. Danach werden die Bodenhalterungen 21 für die Gaskartuschen 19 wieder eingesetzt und hinter den zumindest zwei Gaskartuschen 19 kann jeweils eine Abdeckblende 14 (mit Lüftungsöffnungen) angebracht werden. Dadurch sind die Gaskartuschen 19 stabil und sicher hinter der Außenrückwand 10 des Grillgeräts verbaut und das Grillgerät kann mithilfe des an der Außendeckenwand montierten Tragegriffs 18 gemeinsam mit der Gasquelle an beliebige Orte transportiert werden.

Der Anschluss 15 für die zumindest zwei Gaskartuschen 19 umfasst integrierte Ventile, wodurch die Gaszuleitung für jede der Gaskartuschen 19 geöffnet und geschlossen werden kann. Im Betrieb wird jeweils nur ein Ventil geöffnet, das heißt nur eine der zumindest zwei Gaskartuschen 19 ist jeweils in Verwendung. Sobald die verwendete Kartusche leer ist, kann manuell das Ventil der anderen Kartusche geöffnet werden und die leere Kartusche kann ausgetauscht bzw. nachgefüllt werden. Durch die Verwendung von zumindest zwei Gaskartuschen 19 muss daher der Grillbetrieb nie unterbrochen werden. Außerdem können aufgrund ihrer kleinen Größe und der geringen Menge an Gas in den Kartuschen im Gegensatz zu einer Gasflasche auch mehrere Gaskartuschen gelagert werden.

Ein weiterer wesentlicher Vorteil der Verwendung von Gaskartuschen 19 ist neben der Flexibilität und Sicherheit die geringere Umweltschädlichkeit. Der CO₂ -Ausstoß wird beim erfindungsgemäßen Grillgerät zusätzlich auch durch die Frontklappe 4 minimiert, da das Grillgerät sparsamer betrieben werden kann. Einerseits benötigt das Grillgerät eine geringere Aufwärmzeit, da nicht die gesamte Frontseite geöffnet ist und andererseits kann die durch den Thermoeffekt entstandene Wärme hinter der Frontklappe 4 genützt werden, um das Grillgut aufzutauen bzw. vorzugaren.

Fig. 6 zeigt ein Ausführungsbeispiel eines Grillgerätes, welches im Grundaufbau dem Ausführungsbeispiel von Fig. 1 bis 5 entspricht, wobei es sich allerdings in einigen Details unterscheidet. Einerseits fehlem im Ausführungsbeispiel der Fig. 6 die Rückabdeckung 14 sowie die Löcher in der Bodenplatte und die dazu passenden Bodenhalterungen 21.

Außerdem erstreckt die Außendeckenwand über die Anschlüsse für Gaskartuschen. Darüber hinaus ist die Anschlussplatte 11 an der Unterseite der Außendeckenwand angebracht. In Summe ergibt diese Ausführungsvariante ein stabileres Gehäuse.

## Patentansprüche

1. Grillgerät zum Garen und Grillen von Grillgut, umfassend
• ein Außengehäuse (8),
• ein Innengehäuse, welches den Grillinnenraum begrenzt und eine erste Seitenwand (6), eine zweite Seitenwand (7), die der ersten Seitenwand gegenüberliegt, eine Deckenwand (2), eine Rückwand (9) und eine Bodenplatte (3) aufweist, wobei der Grillinnenraum von der Frontseite zugänglich ist,
• einen Heizstrahler (2'), welcher in die Deckenwand (2) des Grillinnenraums eingebracht ist, wobei der Heizstrahler (2') vorzugsweise ein Gasbrenner ist,
• ein erstes Paar im Wesentlichen horizontal ausgerichteter Führungen (41, 41', 41"), welche an der ersten und zweiten Seitenwand (6, 7) jeweils auf gleicher Höhe angeordnet sind,
• ein zweites Paar im Wesentlichen horizontal ausgerichteter Führungen (42), welche an der ersten und zweiten Seitenwand (6, 7) jeweils auf gleicher Höhe und unterhalb des ersten Paares Führungen (41, 41', 41") angeordnet sind
**dadurch gekennzeichnet, dass** eine schwenkbare Frontklappe (4) vorhanden ist, welche im geschlossenen Zustand den unteren Bereich der Frontseite verschließt und den oberen Bereich der Frontseite offen lässt, wobei das erste Paar Führungen (41, 41', 41") im oberen Bereich der Frontseite angeordnet ist, und wobei das zweite Paar Führungen (42) im unteren Bereich der Frontseite angeordnet ist, wobei die Frontklappe (4) im geschlossenen Zustand zumindest das untere Drittel der Frontseite abdeckt.

2. Grillgerät nach Anspruch 1, **dadurch gekennzeichnet, dass** die Frontklappe (4) nach vorne klappbar ist und vorzugsweise mit einem Scharnier (43) an der Bodenplatte (3) angebracht ist.

3. Grillgerät nach Anspruch 1 oder Anspruch 2, **dadurch gekennzeichnet, dass** die Frontklappe (4) im geöffneten Zustand eine Verlängerung der Bodenplatte (3) bildet.

4. Grillgerät nach einem der Ansprüche 1 bis 3, **gekennzeichnet durch** eine an der Frontseite angebrachte Blende (5'), welche den Heizstrahler (2') zumindest teilweise abdeckt.

5. Grillgerät nach einem der Ansprüche 1 bis 4, **dadurch gekennzeichnet, dass** der Heizstrahler (2') ein Gasbrenner ist, welcher mit einer Gaszuleitung (46) verbunden ist, wobei die Gaszuleitung (46) einen Anschluss für eine Gaskartusche aufweist, welcher an der Außenseite der Rückwand (9) des Innengehäuses angeordnet ist.

6. Grillgerät nach Anspruch 5, wobei das Außengehäuse (8) eine öffenbare Abdeckung (12) im Bereich der Anschlussventile (15) an der Rückseite der Außendeckenwand (2) umfasst.

7. Grillgerät nach einem der Ansprüche 1 bis 6, **gekennzeichnet durch** eine elektrische Zündvorrichtung (16), wobei die Zündvorrichtung (16) vorzugsweise eine Piezozündung ist.

8. Grillgerät nach einem der Ansprüche 1 bis 7, **dadurch gekennzeichnet, dass** das Außengehäuse (8) Lüftungsöffnungen aufweisen.

9. Grillgerät nach einem der Ansprüche 1 bis 8, **gekennzeichnet durch** einen integrierten Zeitschalter, wobei der Zeitschalter den Heizstrahler (2') aktiviert bzw. deaktiviert.

10. Grillgerät nach einem der Ansprüche 1 bis 9, wobei an der Außendeckenwand ein Tragegriff (18) vorhanden ist.

## Claims

1. Grill for cooking and grilling food, comprising
• an outer housing (8),
• an inner housing defining the grill interior and having a first side wall (6), a second side wall (7) opposite the first side wall, a top wall (2), a rear wall (9), and a bottom plate (3), wherein the grill interior is accessible from the front side,
• a radiant heater (2'), which is inserted in the top wall (2) of the grill interior, wherein the radiant heater (2') is preferably a gas burner,
• a first pair of substantially horizontally aligned guides (41, 41', 41") arranged on the first and second side walls (6, 7), respectively, at the same height,
• a second pair of substantially horizontally oriented guides (42) disposed on the first and second side walls (6, 7) respectively at the same level and below the first pair of guides (41, 41', 41")
**characterized in that** a pivotable front flap (4) is provided which, in the closed state, closes the lower region of the front side and leaves the upper region of the front side open, the first pair of guides (41, 41', 41") being arranged in the upper region of the front side, and the second pair of guides (42) being arranged in the lower region of the front side, the front flap (4), in the closed state, covering at least the lower third of the front side.

2. Grill according to claim 1, **characterized in that** the front flap (4) can be folded forwards and is preferably attached to the bottom plate (3) with a hinge (43).

3. Grill according to claim 1 or claim 2, **characterized in that** the front flap (4) forms an extension of the bottom plate (3) in the open state.

4. Grill according to any of claims 1 to 3, **characterized by** a screen (5') attached to the front side, which at least partially covers the radiant heater (2').

5. Grill according to any one of claims 1 to 4, **characterized in that** the radiant heater (2') is a gas burner which is connected to a gas supply line (46), the gas supply line (46) having a connection for a gas cartridge which is arranged on the outside of the rear wall (9) of the inner housing.

6. Grill according to claim 5, wherein the outer housing (8) comprises an openable cover (12) in the area of the connection valves (15) at the rear side of the outer top wall (2).

7. Grill according to any one of claims 1 to 6, **characterized by** an electric ignition device (16), wherein the ignition device (16) is preferably a piezo ignition.

8. Grill according to any one of claims 1 to 7, **characterized in that** the outer housing (8) has ventilation openings.

9. Grill according to any one of claims 1 to 8, **characterized by** an integrated timer, wherein the timer activates or deactivates the radiant heater (2').

10. Grill according to any one of claims 1 to 9, wherein a carrying handle (18) is provided on the outer top wall.

## Revendications

1. Barbecue pour cuire et griller des aliments à griller, comprenant
• une enveloppe extérieure (8),
• une enveloppe intérieure qui délimite l'espace intérieur de grillage et présente une première paroi latérale (6), une deuxième paroi latérale (7) qui fait face à la première paroi latérale, une paroi de recouvrement (2), une paroi arrière (9) et une plaque de fond (3), l'espace intérieur de grillage étant accessible par la face avant,
• un dispositif de chauffage radiant (2') qui est inséré dans la paroi de recouvrement (2) de l'espace intérieur de grillage, lequel dispositif de chauffage radiant (2') est un brûleur à gaz,
• une première paire de glissières (41, 41', 41") orientées sensiblement horizontalement qui sont disposées à la même hauteur respectivement sur la première et la deuxième paroi latérale (6, 7),
• une deuxième paire de glissières (42) orientées sensiblement horizontalement qui sont disposées à la même hauteur respectivement sur la première et la deuxième paroi latérale (6, 7) et au-dessous de la première paire de glissières (41, 41', 41"), **caractérisé en ce qu'**il comporte un volet frontal pivotant (4) qui, à l'état fermé, obture la zone inférieure de la face avant et laisse ouverte la zone supérieure de la face avant, la première paire de glissières (41, 41', 41") étant disposée dans la zone supérieure de la face avant et la deuxième paire de glissières (42) étant disposée dans la zone inférieure de la face avant, lequel volet frontal (4) recouvre au moins le tiers inférieur de la face avant à l'état fermé.

2. Barbecue selon la revendication 1, **caractérisé en ce que** le volet frontal (4) est repliable vers l'avant et est de préférence monté sur la plaque de fond (3) avec une charnière (43).

3. Barbecue selon la revendication 1 ou la revendication 2, **caractérisé en ce qu'**à l'état ouvert, le volet frontal (4) forme une prolongation de la plaque de fond (3).

4. Barbecue selon une des revendications 1 à 3, **caractérisé par** une plaque (5') montée sur la face avant qui recouvre au moins partiellement le dispositif de chauffage radiant (2').

5. Barbecue selon une des revendications 1 à 4, **caractérisé en ce que** le dispositif de chauffage radiant (2') est un brûleur à gaz qui est relié à une conduite d'arrivée de gaz (46), laquelle conduite d'arrivée de gaz (46) présente un raccord pour une cartouche de gaz qui est monté sur la face extérieure de la paroi arrière (9) de l'enveloppe intérieure.

6. Barbecue selon une des revendications 1 à 5, dans lequel l'enveloppe extérieure (8) comprend un capot ouvrable (12) dans la région des vannes de raccordement (15) sur la face arrière de la paroi de recouvrement extérieure (2).

7. Barbecue selon une des revendications 1 à 6, **caractérisé par** un dispositif d'allumage électrique (16), lequel dispositif d'allumage est de préférence un allumage piézoélectrique.

8. Barbecue selon une des revendications 1 à 7, **caractérisé en ce que** l'enveloppe extérieure (8) comporte des ouvertures d'aération.

9. Barbecue selon une des revendications 1 à 8, **caractérisé par** une minuterie intégrée, laquelle minuterie active et désactive le dispositif de chauffage radiant (2').

10. Barbecue selon une des revendications 1 à 9, sur lequel une poignée de transport (18) est présente sur la paroi de recouvrement extérieure.
